(19) Europäisches Patentamt European Patent Office Office européen des brevets

(11) **EP 4 769 439 A1**

(12) **EUROPEAN PATENT APPLICATION**
published in accordance with Art. 153(4) EPC

(43) Date of publication:
**01.07.2026 Bulletin 2026/27**

(21) Application number: **24946882.8**

(22) Date of filing: **30.09.2024**

(51) International Patent Classification (IPC):
**G21C 17/017** (2006.01)

(52) Cooperative Patent Classification (CPC):
**G21C 17/017;** Y02E 30/30

(86) International application number:
**PCT/CN2024/122934**

(87) International publication number:
**WO 2026/011581 (15.01.2026 Gazette 2026/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **CGN Inspection Technology Co., Ltd.**
  **Shenzhen, Guangdong 518000 (CN)**
• **Suzhou Nuclear Power Research Institute Co., Ltd.**
  **Suzhou, Jiangsu 215004 (CN)**

(72) Inventors:
• **LI, Jie**
  **Shenzhen, Guangdong 518000 (CN)**
• **WANG, Tao**
  **Shenzhen, Guangdong 518000 (CN)**
• **LIU, Chao**
  **Shenzhen, Guangdong 518000 (CN)**
• **ZENG, Chenming**
  **Shenzhen, Guangdong 518000 (CN)**

• **XU, Junlong**
  **Shenzhen, Guangdong 518000 (CN)**
• **YE, Xin**
  **Shenzhen, Guangdong 518000 (CN)**
• **XIAO, Xuezhu**
  **Shenzhen, Guangdong 518000 (CN)**
• **CHEN, Huaidong**
  **Shenzhen, Guangdong 518000 (CN)**
• **LIN, Ge**
  **Shenzhen, Guangdong 518000 (CN)**
• **MA, Guanbing**
  **Shenzhen, Guangdong 518000 (CN)**
• **YU, Zhe**
  **Shenzhen, Guangdong 518000 (CN)**
• **CHEN, Yang**
  **Shenzhen, Guangdong 518000 (CN)**
• **YOU, Jiawei**
  **Shenzhen, Guangdong 518000 (CN)**

(74) Representative: **Westphal, Mussgnug & Partner, Patentanwälte mbB**
  **Werinherstraße 79**
  **81541 München (DE)**

(54) **DEVICE FOR INSPECTING INNER FILLET ON OPENING OF REACTOR PRESSURE VESSEL NOZZLE, AND OPERATING METHOD THEREOF**

(57) Disclosed in the present invention are a device for inspecting an inner fillet on the opening of a reactor pressure vessel nozzle, and an operating method thereof. The device for inspecting an on the opening of a reactor pressure vessel nozzle comprises a radial positioning mechanism, an axial positioning mechanism arranged on the radial positioning mechanism, an adaptive linkage mechanism arranged on the axial positioning mechanism, and a probe assembly arranged on the adaptive linkage mechanism, wherein the radial positioning mechanism drives the axial positioning mechanism, the adaptive linkage mechanism, and the probe assembly to move back and forth in the radial direction of the opening of a pressure vessel nozzle; and the axial positioning mechanism can move back and forth in the axial direction of the nozzle to drive the adaptive linkage mechanism and the probe assembly to move closer to or away from a boss surface of the nozzle and an inner fillet region of the opening, respectively. By means of adaptive adjustment of the adaptive linkage mechanism, the present invention can fit onto the boss surface of the nozzle, and can ensure that the positions of the probe assembly and the inner fillet are relatively consistent, thereby enabling the stable fitting between the probe assembly and the inner fillet region, and realizing ultra-

EP 4 769 439 A1

**(Cont. next page)**

sonic inspection of the inner fillet region.

Fig.1

**Description**

TECHNICAL FIELD

The present invention relates to the field of nuclear power equipment inspecting technology, and more particularly to a device for inspecting inner radius region on opening of reactor pressure vessel nozzle, and operating method thereof.

THE RELATED ART

The reactor pressure vessel (RPV), classified as a nuclear class 1 component, is one of the core elements of the nuclear reactor coolant pressure boundary. It is composed of a flange ring, cylinder body, inlet/outlet nozzles and other cylinder assemblies, the top head assembly, the bottom head, and flange seals. Among these, the inner radius region of pressure vessel nozzle is prone to stress concentration due to mechanical loads, pressure fluctuations, high temperature and pressure, high radiation, and thermal loads, which can lead to crack initiation. Therefore, regular inspection and monitoring are necessary to ensure the integrity of the primary circuit pressure boundary. The ASME Code explicitly mandates volumetric examination of the inner radius region of the nozzle, with ultrasonic testing (UT) being the primary method for such inspection.

The inner radius region at orifice of the reactor pressure vessel outlet nozzle has a complex and specific structure, with a shape of saddle surface. Its inner surface is clad with a stainless steel weld overlay approximately 6 mm thick. According to the inspection requirements of ASME Section IX, the inspection area for the nozzle inner radius region extends to a depth of 1/2 inch (13 mm) beneath the weld overlay. The inner radius region of the outlet nozzle is an irregular structure formed by the intersection of the nozzle's inner surface and the cylindrical surface of water outlet boss, followed by chamfering. Due to the specific and irregular structure of this location, achieving precise probe scanning solely through multi-axis motion control is challenging. Consequently, it is essential to design a dedicated mechanical positioning and inspection device to accurately position the ultrasonic probe on the outlet nozzle inner radius region, thereby enabling automated inspection of the component under inspection.

SUMMARY OF THE INVENTION

The technical problem that the present invention is made to overcome is to provide a device for inspecting inner radius region on opening of reactor pressure vessel nozzle, and operating method thereof, for accurate positioning and inspection.

A technical solution that the present invention adopts to overcome the technical problem is: providing a device for inspecting inner radius region on opening of reactor pressure vessel nozzle, characterized by comprising a radial positioning mechanism, an axial positioning mechanism disposed on the radial positioning mechanism, an adaptive linkage mechanism disposed on the axial positioning mechanism, and a probe assembly disposed on the adaptive linkage mechanism;

wherein the radial positioning mechanism is configured to drive the axial positioning mechanism, the adaptive linkage mechanism, and the probe assembly to move back and forth along a radial direction of an opening of a nozzle of a pressure vessel; wherein the axial positioning mechanism is movable back and forth in an axial direction of the nozzle relative to the radial positioning mechanism, so as to drive the adaptive linkage mechanism to approach or move away from a boss surface of the nozzle, and drive the probe assembly to approach or move away from an inner radius region of the opening, respectively; and wherein the adaptive linkage mechanism is configured, through an adaptive action, to drive itself to be in contact with the boss surface of the nozzle, and drive the probe assembly to be in contact with the inner radius region of the opening, respectively.

Preferably, the adaptive linkage mechanism comprises a slide plate, a swingable rod, and a positioning assembly;

wherein the slide plate is engaged with the axial positioning mechanism and is movable back and forth along axial direction of the nozzle relative to the axial positioning mechanism, the swingable rod is connected to the slide plate at an adjustable angle; the positioning assembly is disposed on the swingable rod, configured to slidingly contact the boss surface of the nozzle, and guides a synchronous change in the angle between the swingable rod and the slide plate;

wherein the probe assembly is located on one side of the swingable rod, is movably connected to the slide plate, and is rotatable relative to the slide plate to allow the probe assembly to be in contact with the inner radius region of the opening.

Preferably, the positioning assembly comprises a positioning seat and at least two positioning balls for slidingly being contact with the boss surface of the nozzle; the positioning seat is disposed on the swingable rod and parallel to a length direction of the swingable rod, and the at least two positioning balls are arranged at intervals along the length direction of the positioning seat.

Preferably, the probe assembly comprises a probe support and an ultrasonic probe; wherein the probe support is movably connected to the slide plate, the ultrasonic probe is disposed on the probe support and has multiple degrees of freedom relative to the slide plate.

Preferably, the probe support comprises a bracket and a probe frame; one end of the bracket is connected to the slide plate via a pivot assembly, the probe frame is rotatably connected to the other end of the bracket;

wherein the ultrasonic probe is swingably mounted inside the probe frame, and the ultrasonic probe has a probe surface configured to conform to the inner radius region of the opening.

Preferably, the pivot assembly comprises a pivot passing through the bracket and the slide plate, a torsion spring sleeved on the pivot, and a limit plate disposed on the bracket and configured to abut against the slide plate.

Preferably, the bracket comprises a first U-shaped frame and a second U-shaped frame; the first U-shaped frame is connected to the slide plate via the pivot assembly, the second U-shaped frame is engaged with the first U-shaped frame and is swingable back and forth relative to the first U-shaped frame.

Preferably, the axial positioning mechanism comprises an L-shaped bracket movable back and forth along axial direction of the nozzle relative to the radial positioning mechanism;

wherein a horizontal portion of the L-shaped bracket is provided with guide rail and a rolling element; the slide plate is engaged with the guide rail via a slider and is movable back and forth along the axial direction of the nozzle along the guide rail; the rolling element protrudes above the slide plate on the horizontal portion for being contact with an inner wall of the nozzle; one end of the swingable rod is rotatably connected to the slide plate, and the other end of the swingable rod is rotatably connected to a vertical portion of the L-shaped bracket.

Preferably, the axial positioning mechanism further comprises a pneumatic assembly disposed on the radial positioning mechanism and supporting the L-shaped bracket, the pneumatic assembly drives the L-shaped bracket to move back and forth along the axial direction of the nozzle relative to the radial positioning mechanism.

Preferably, the radial positioning mechanism comprises a slide table mounting plate and a drive assembly, the slide table mounting plate is disposed on a drive shaft of the drive assembly, the drive assembly drives the slide table mounting plate to move back and forth along the radial direction of the opening of the nozzle of the pressure vessel; the axial positioning mechanism is disposed on the slide table mounting plate and is fixed relative thereto.

Preferably, the radial positioning mechanism further comprises a support base and a guiding component;

wherein the drive assembly is supported on the support base; the drive shaft of the drive assembly is extendable and retractable relative to the support base, driving the slide table mounting plate to move back and forth along the radial direction of the opening of the nozzle relative to the support base; and

wherein the guiding component is movably passed through the support base and connected to the slide table mounting plate, providing guidance for the back-and-forth movement of the slide table mounting plate.

The present invention also provides an operating method of the device for inspecting inner radius region on opening of reactor pressure vessel nozzle according to any one of claims 1 to 11, characterized in that at least two sets of devices are installed in pairs on a main device coaxial with the nozzle, the two sets of devices for inspecting inner radius region on opening of reactor pressure vessel nozzle being symmetrically arranged about a central axis of the nozzle; and

movement of the device for inspecting inner radius region on opening of reactor pressure vessel nozzle inside the nozzle satisfies the following formula:

$$Z = \sqrt{R^2 - (r\sin\theta)^2};$$

where, Z is the distance , R is the radius of the circle on which the boss surface of the nozzle lies within the pressure vessel, r is the inner radius of the nozzle, $\theta$ is the circumferential position angle of the device for inspecting inner radius region on opening of reactor pressure vessel nozzle within the nozzle, where 0° is defined as the top vertical position of the boss surface.

The beneficial effects of the present invention is: through the coordinated action of the adaptive linkage mechanism and the probe assembly with the radial positioning mechanism and axial positioning mechanism, the adaptive linkage mechanism is delivered to the boss surface of the nozzle, and the probe assembly is delivered to the inner radius region of the opening of the nozzle. The adaptive linkage mechanism is maintained in contact with the boss surface via adaptive adjustment, while ensuring the relative position of the probe assembly and the inner radius region are consistent, thereby achieving stable contact between the probe assembly and the inner radius region, thus enable ultrasonic inspecting on the inner radius region.

The reactor pressure vessel of the nuclear power plant types applicable under this patent features a fillet with radius less than R19. During ultrasonic inspecting, the probe must be precisely positioned in the inner radius region to ensure accurate relative positioning between the probe and the inspected component, thereby guaranteeing the reliability of defect detection.

BRIEF DESCRIPTION OF THE DRAWINGS

The present invention will now be described in further detail with reference to the drawings and embodiments. In the drawings:

> FIG. 1 is a schematic diagram illustrating an operational state of a device for inspecting inner radius region on opening of reactor pressure vessel nozzle according to an embodiment of the present invention.

> FIG. 2 is a schematic diagram illustrating a state where two devices for inspecting inner radius region on opening of reactor pressure vessel nozzle according to an embodiment of the present invention are used in pairs at the nozzle opening.

> FIG. 3 is a schematic structural diagram of the device for inspecting inner radius region on opening of reactor pressure vessel nozzle according to an embodiment of the present invention.

> FIG. 4 is a schematic structural diagram of a radial positioning mechanism shown in FIG. 3.

> FIG. 5 is a schematic structural diagram of an axial positioning mechanism shown in FIG. 3.

> FIG. 6 is a schematic structural diagram illustrating an adaptive linkage mechanism mounted on the axial positioning mechanism shown in FIG. 3.

> FIG. 7 is a schematic structural diagram of a probe assembly shown in FIG. 3.

> FIG. 8 is a schematic structural diagram of a probe assembly shown in FIG. 7 where the bracket is partially removed.

## DETAILED DESCRIPTION OF THE EMBODIMENTS

To provide a clearer understanding of the technical features, objectives, and effects of the present invention, the specific embodiments of the present invention are described in detail below with reference to the drawings.

The device for inspecting inner radius region on opening of reactor pressure vessel nozzle according to the present invention is used for inspecting the inner radius region on the nozzle orifice (i.e., the tube opening of the nozzle) of a nuclear reactor pressure vessel. The nozzles on the pressure vessel include, but are not limited to, outlet nozzle(s).

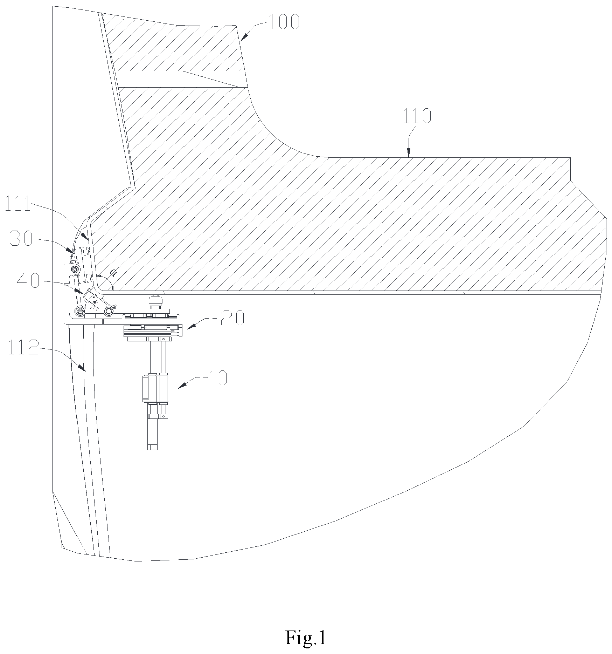

Referring to FIGS. 1 to 3, an embodiment of the device for inspecting inner radius region on opening of reactor pressure vessel nozzle according to the present invention may include a radial positioning mechanism 10, an axial positioning mechanism 20 disposed on the radial positioning mechanism 10, an adaptive linkage mechanism 30 disposed on the axial positioning mechanism 20, and a probe assembly 40 disposed on the adaptive linkage mechanism 30.

The radial positioning mechanism 10 is used to drive the axial positioning mechanism 20, the adaptive linkage mechanism 30 thereon, and the probe assembly 40 to move back and forth at the opening(orifice) of the nozzle 110 of the pressure vessel 100 along radial direction of the nozzle 110, thereby approaching or moving away from the inner wall of the nozzle 110. The axial positioning mechanism 20 is disposed on the radial positioning mechanism 10 and can move back and forth relative to the radial positioning mechanism 10 along axial direction of the nozzle 110, driving the adaptive linkage mechanism 30 to approach or move away from the boss surface 111 of the nozzle 110, and driving the probe assembly 40 to approach or move away from the inner radius region 112 of the opening of the nozzle 110. The adaptive linkage mechanism 30 has an adaptive function, driving itself to be in contact with the boss surface 111 of the nozzle 110, and driving the probe assembly 40 to be in contact with the inner radius region 112 of the opening, through adaptive action.

As shown in FIGS. 1, 3, and 4, in some embodiments, the radial positioning mechanism 10 may include a slide table mounting plate 11 and a drive assembly 12. The slide table mounting plate 11 is disposed on a drive shaft 121 of the drive assembly 12. The extension and retraction of the drive shaft 121 of the drive assembly 12 drives the slide table mounting plate 11 to move back and forth relative to a main body of the drive assembly 12. Inside the nozzle 110, the drive assembly 12 is used to drive the slide table mounting plate 11 and the axial positioning mechanism 20 thereon, etc., to move back and forth at the opening of the nozzle 110 of the pressure vessel 100 along radial direction of the nozzle 110, thereby driving the adaptive linkage mechanism 30 on the axial positioning mechanism 20 to approach or move away from the boss surface 111 of the nozzle 110, and driving the probe assembly 40 on the axial positioning mechanism 20 to approach or move away from the inner radius region 112 of the opening.

As an option, the drive assembly 12 comprises a cylinder, preferably a pen-type cylinder. Inside the nozzle 110, the pen-type cylinder is parallel to the radial direction of the nozzle 110, and the telescopic rod (i.e., the drive shaft 121) of the pen-type cylinder faces the inner wall of the nozzle 110. The slide table mounting plate 11 is fixedly mounted on the telescopic rod of the pen-type cylinder and moves back and forth radially at the opening of the nozzle 110 with the extension and retraction of the telescopic rod.

Furthermore, the radial positioning mechanism 10 also includes a support base 13 and a guiding component. The drive assembly 12 is supported on the support base 13, using the support base 13 as a fixed fulcrum. The drive shaft 121 of the drive assembly 12 is extendable and retractable relative to the support base 13, driving the slide table mounting plate 11 to move back and forth radially relative to the support base 13 at the opening of the nozzle 110.

It is understandable that the support base 13 can further be mounted on a main device (e.g., a main shaft, etc.). The support base 13 and the entire device for inspecting inner radius region on opening of reactor pressure vessel nozzle are advanced into or retracted from the interior of the nozzle 110 by the main device.

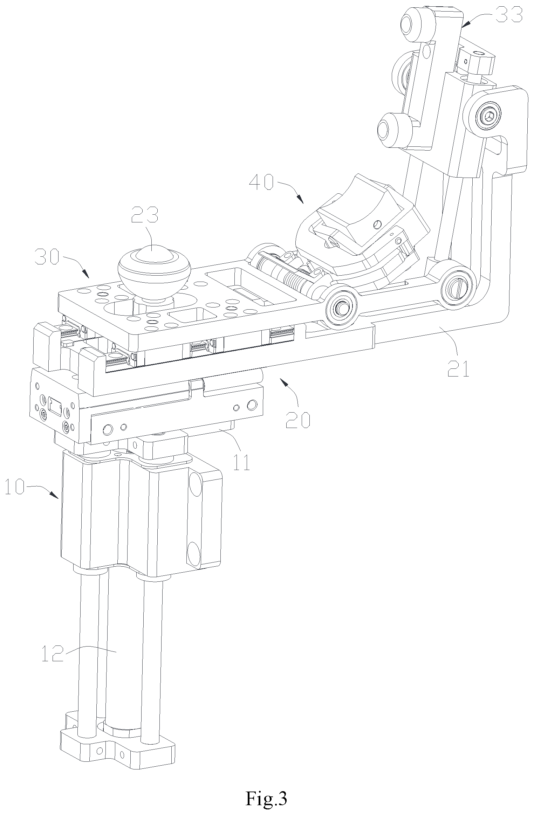

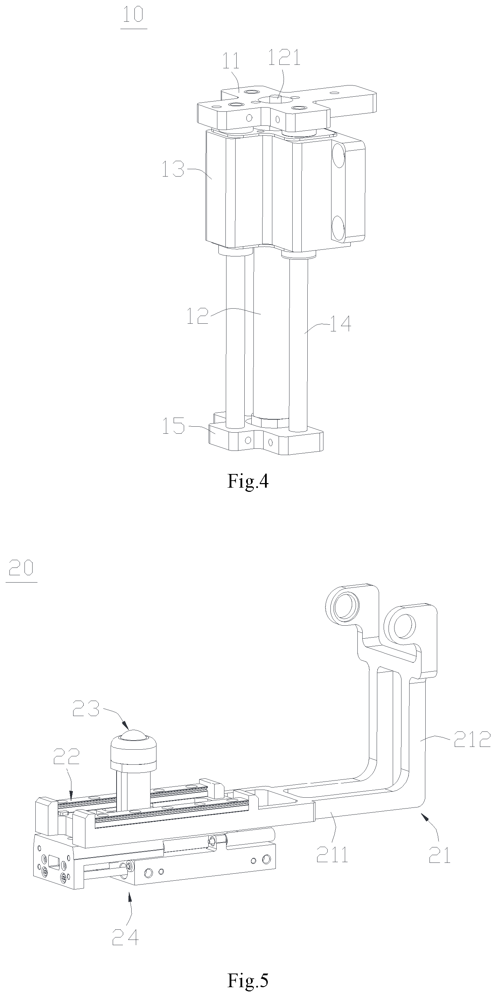

The guiding component movably passes through the support base 13 and is connected to the slide table mounting plate 11, providing guidance for the back-and-forth movement of the slide table mounting plate 11 and maintaining the stability of its movement. In the embodiment shown in FIGS. 3 and 4, the guiding component includes at least one guide rod 14 and an end plate 15. The guide rod 14 passes through the support base 13 and is movable back and forth along its own axis relative to the support base 13. One end of the guide rod 14 is connected to the slide table mounting plate 11, and the opposite end of the guide rod 14 is connected to the end plate 15. When the drive assembly 12 is activated to drive the slide table mounting plate 11 back and forth, it also drives the guide rod 14 and the end plate 15 to move synchronously relative to the support base 13. Two or more guide rods 14 are preferred.

The support base 13 can be a linear bearing housing. The guide rod 14 cooperates with the linear bearing housing via linear bearings. The end plate 15 and the slide table mounting plate 11 are located on opposite sides of the linear bearing housing. The provision of the end plate 15 increases the overall rigidity of the radial positioning mechanism 10.

The axial positioning mechanism 20 is disposed on the slide table mounting plate 11 of the radial positioning mechanism 10 and is relatively fixed to the slide table mounting plate 11, moving with the slide table mounting plate 11. Inside the nozzle 110, the slide table mounting plate 11 moves back and forth along radial direction of the opening of the nozzle 110 under the drive of the drive assembly 12, causing the axial positioning mechanism 20 to also move back and forth along radial direction of the opening of the nozzle 110.

As shown in FIGS. 3 and 5, in some embodiments, the axial positioning mechanism 20 may include an L-shaped bracket 21. This L-shaped bracket 21 is movable back and forth along axial direction of the nozzle 110 relative to the radial positioning mechanism 10. The adaptive linkage mechanism 30 and the probe assembly 40 are both disposed on the L-shaped bracket 21 and move along axial direction of the nozzle 110 with the L-shaped bracket 21.

Structurally, the L-shaped bracket 21 is formed by connecting a horizontal portion 211 and a vertical portion 212. Specifically, guide rail 22 and a rolling element 23 are provided on the horizontal portion 211 of the L-shaped bracket 21. The guide rail 22 is used to cooperate with the adaptive linkage mechanism 30, enabling the adaptive linkage mechanism 30 to be movably adjusted on the L-shaped bracket 21. The rolling element 23 is used to contact the inner wall of the nozzle 110, achieving positioning of the radial positioning mechanism 10. That is, after the rolling element 23 contacts the inner wall of the nozzle 110, it restricts the radial degree of freedom of the device for inspecting inner radius region on opening of reactor pressure vessel nozzle.

As an option, the rolling element 23 may comprise a universal ball. This universal ball can be positioned and elevated on the L-shaped bracket 21 via a support pillar. It can pass through the adaptive linkage mechanism 30 to ensure that the universal ball can contact the inner wall of the nozzle 110.

To drive the back-and-forth movement of the L-shaped bracket 21, the axial positioning mechanism 20 may further include a pneumatic assembly 24 disposed on the radial positioning mechanism 10 and supporting the L-shaped bracket 21. The pneumatic assembly 24 is used to drive the L-shaped bracket 21 to move back and forth along axial direction of the nozzle 110 relative to the radial positioning mechanism 10.

The pneumatic assembly 24 may further comprise a pneumatic slide table. After being supplied with air, the pneumatic slide table can move along axial direction of the nozzle 110. After the radial positioning mechanism 10 drives the L-shaped bracket 21 to move along radial direction of the nozzle 110 and the rolling element 23 contacts the inner wall of the nozzle 110, the pneumatic slide table extends to drive the adaptive linkage mechanism 30 towards the boss surface 111 of the nozzle 110 until the adaptive linkage mechanism 30 is be in contact with the boss surface 111.

Herein, the pneumatic slide table is fixed to the slide table mounting plate 11 via slide table main body. The L-shaped bracket 21 is positioned on the sliding seat of the pneumatic slide table. The rolling element 23 can be positioned on the sliding seat of the pneumatic slide table via a support pillar, which elevates the rolling element 23 above the horizontal portion 211 of the L-shaped bracket 21. When two relatively spaced guide rails 22 are provided on the horizontal portion 211, the rolling element 23 is located in the gap between the two guide rails 22.

The adaptive linkage mechanism 30 is cooperatively engaged with the L-shaped bracket 21 of the axial positioning mechanism 20 and is movable relative to the L-shaped bracket 21 to achieve adaptation.

With reference to FIGS. 1, 3, 5, and 6, in some embodiments, the adaptive linkage mechanism 30 includes a slide plate 31, a swingable rod 32, and a positioning assembly 33.

The slide plate 31 is positioned on the L-shaped bracket 21 by cooperating with the guide rail 22 on the L-shaped bracket 21 via a slider, and can move freely along the guide rail 22 in the direction of its length (which is also the axial direction of the nozzle 110). Dimensionally, the length of the slide plate 31 is preferably equal to or less than the length of the horizontal portion 211 of the L-shaped bracket 21, and the width of the slide plate 31 is preferably equal to or less than the width of the horizontal portion 211, to avoid the edge portion of the slide plate 31 protruding beyond the horizontal portion 211 and increasing volume and compromising external integrity.

The swingable rod 32 is arranged upright relative to the slide plate 31, located on one side of the vertical portion 212 of the L-shaped bracket 21 and connected to the slide plate 31 at an angle. The swingable rod 32 and the slide plate 31 are connected by a pivot (or hinged), allowing the angle between them to be adjustable. Specifically, one end of the swingable rod 32 is rotatably connected to one end of the slide plate 31, and the opposite end of the swingable rod 32 is rotatably connected to the vertical portion 212 of the L-shaped bracket 21 via a pivot. When the slide plate 31 slides along the guide rail 22, it causes the swingable rod 32 to rotate relative to the vertical portion 212; conversely, when the swingable rod 32 rotates relative to the vertical portion 212, it drives the slide plate 31 to slide along the guide rail 22.

The positioning assembly 33 is disposed on the swingable rod 32 and is used to slidingly contact the boss surface 111 of the nozzle 110. By contacting the boss surface 111 of the nozzle 110, the positioning assembly 33 guides synchronous changes in the angle between the swingable rod 32 and the slide plate 31, achieving adaptation. The probe assembly 40 is located on one side of the swingable rod 32 and is movably connected to the slide plate 31. The probe assembly 40 can rotate relative to the slide plate 31 to allow itself to be in contact with the inner radius region 112 of the opening of the nozzle 110.

As an optional implementation, the positioning assembly 33 may further include a positioning seat 331 and at least two positioning balls 332 for sliding contact with the boss surface 111 of the nozzle 110. The positioning seat 331 has a certain length and is disposed on the swingable rod 32 parallel to the length direction of the swingable rod 32. At least two positioning balls 332 are arranged at intervals along the length direction of the positioning seat 331.

On the side of the boss surface 111 of the nozzle 110, the two positioning balls 332 of the positioning assembly 33 contact the boss surface 111. When the entire device of the present invention moves along radial direction of the opening of the nozzle 110, the positioning balls 332 also move radially along the boss surface 111. Since the angle $\alpha$ between the boss surface 111 and the axis of the nozzle 110 (the angle $\alpha$ typically ranges from 90° to 102°) varies at different circumferential angles of the outlet nozzle, the two positioning balls 332, while maintaining contact with the boss surface 111, will cause the positioning assembly 33 to rotate as the angle $\alpha$ changes. This guides the angle between the swingable rod 32 the boss surface 111 to change synchronously, which in turn drives the swingable rod 32 to slide within the L-shaped bracket 21. The swingable rod 32 also drives the slide plate 31 connected with it to move. The movement of the slide plate 31 ensures that the relative positional relationship between the probe assembly 40 and the inner radius region 112 remains stable.

The positioning balls 332 are preferably universal balls.

The probe assembly 40 is used to contact the inner radius region 112 of the opening of the nozzle 110 for ultrasonic inspection of the inner radius region. The ultrasonic signals are sent to a backend monitoring system for processing and storage.

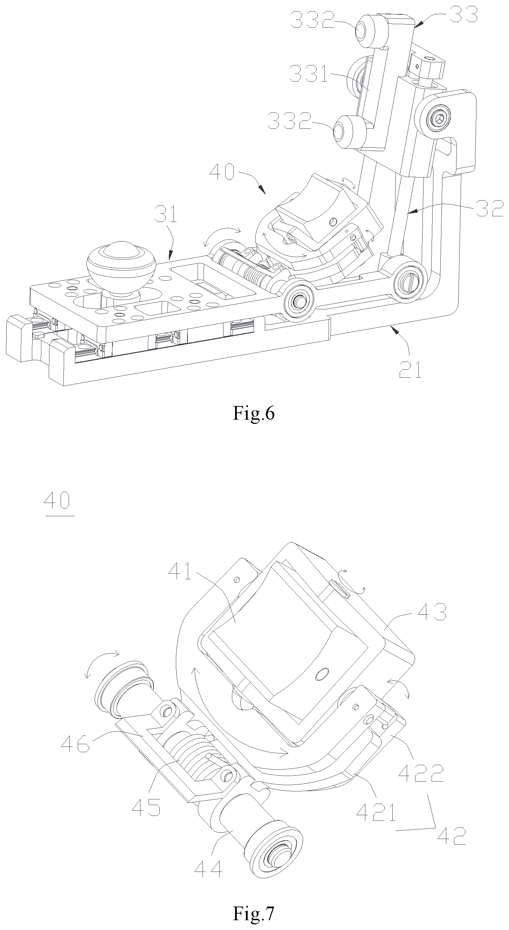

In some embodiments, referring to FIGS. 6 and 7, the probe assembly 40 includes a probe support and an ultrasonic probe 41. The probe support is movably connected to the slide plate 31. The ultrasonic probe 41 is disposed on the probe support and has multiple degrees of freedom relative to the slide plate 31, ensuring stable contact between the ultrasonic probe 41 and the inner radius region 112, preventing lifting or jamming of the ultrasonic probe 41.

The ultrasonic probe 41 has a probe surface that conforms to the inner radius region 112 of the opening of the nozzle 110.

When the positioning assembly 33 of the adaptive linkage mechanism 30 correctly contacts the boss surface 111 of the nozzle 110, the ultrasonic probe 41 precisely contacts the inner radius region, thereby enabling ultrasonic signal acquisition from the inner radius region 112.

Further, the probe support may include a bracket 42 and a probe frame 43. The ultrasonic probe 41 is disposed within the probe frame 43. One end of the bracket 42 is connected to the slide plate 31. The probe frame 43 is rotatably connected to the other end of the bracket 42 via a pivot. The probe frame 43 drives the ultrasonic probe 41 to rotate relative to the bracket 42. The rotation of the probe frame 43 relative to the bracket 42 provides a first degree of freedom. The ultrasonic probe 41 is swingably mounted inside the probe frame 43 via a connection of pivot. The axis of this pivot is perpendicular to the axis of the pivot connecting the probe frame 43 to the bracket 42. The swingable movement of the ultrasonic probe 41 provides a second degree of freedom.

The aforementioned two degrees of freedom ensure stable contact between the ultrasonic probe 41 and the inner radius region 112, preventing lifting or jamming of the ultrasonic probe 41.

Preferably, one end of the bracket 42 is connected to the slide plate 31 via a pivot assembly. Thus, the entire probe support can rotate relative to the slide plate 31 through this pivot assembly, providing a third degree of freedom and sufficient clamping force for stable contact between the ultrasonic probe 41 and the inner radius region 112.

The pivot assembly includes a pivot 44 passing through the bracket 42 and the slide plate 31, a torsion spring 45 sleeved on the pivot 44, and a limit plate 46 disposed on the bracket 42 for abutting against the slide plate 31. The bracket 42 can rotate relative to the slide plate 31 in directions towards and away from the swingable rod 32 via the pivot 44. Two ends of the torsion spring 45 respectively abutting the bracket 42 and the slide plate 31, providing a clamping force that drives the stable contact between the ultrasonic probe 41 and the inner radius region 112. The limit plate 46 is located on the side of the bracket 42 opposite to the swingable rod 32 and restricts excessive rotation of the bracket 42 away from the swingable rod 32 by abutting against the slide plate 31.

The bracket 42 can be an H-shaped bracket, or a U-shaped bracket, etc.

In some embodiments, to allow the ultrasonic probe 41 to conform more flexibly to the inner radius region 112, the bracket 42 is optimized to provide a fourth degree of freedom. To this end, the bracket 42 may further include a first U-shaped frame 421 and a second U-shaped frame 422. The first U-shaped frame 421 is connected to the slide plate 31 via the pivot assembly. The second U-shaped frame 422 is engaged with the first U-shaped frame 421 and can swing back and forth relative to the first U-shaped frame 421 in the width direction of the bracket 42.

Furthermore, the swinging of the second U-shaped frame 422 relative to the first U-shaped frame 421 is an arcuate swing, causing the probe frame 43 and the ultrasonic probe 41 within the bracket 42 to also swing along an arcuate path, adjusting the angle of the concave surface of the ultrasonic probe 41.

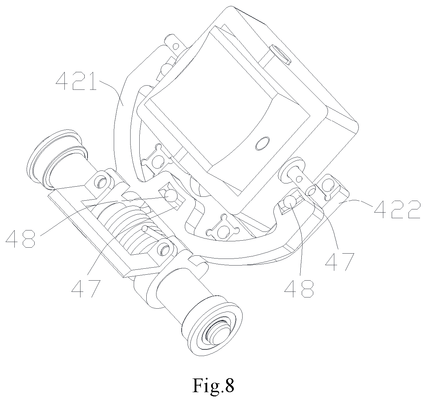

Further, as shown in FIGS. 7 and 8, to achieve the swinging of the second U-shaped frame 422 relative to the first U-shaped frame 421, the crossbar and the two opposing vertical bars of the first U-shaped frame 421 are respectively provided with elongated slots 47. The crossbar and the two opposing vertical bars of the second U-shaped frame 422 are respectively provided with balls 48. The balls 48 are respectively engaged in the corresponding elongated slots 47, so that the balls 48 can roll within their respective elongated slots 47 along the extension direction of the elongated slots 47, thereby driving the second U-shaped frame 422 to swing relative to the first U-shaped frame 421.

As an option, the second U-shaped frame 422 may further be formed by two U-shaped plates oppositely engaged. In the bracket 42, the two U-shaped plates of the second U-shaped frame 422 are respectively engaged on opposite sides of the first U-shaped frame 421.

The working method of the present invention is described below, taking the inspection of the inner radius region on the opening of an outlet nozzle of pressure vessel as an example.

When the device for inspecting inner radius region on opening of reactor pressure vessel nozzle according to the present invention is in use, preferably, at least two devices are installed in pairs on a main device coaxial with the outlet nozzle via an intermediate support member 200. The two sets of devices for inspecting inner radius region on opening of reactor pressure vessel nozzle are arranged in a line inside the nozzle and are symmetrically arranged about the central axis of the nozzle.

The main device has two degrees of freedom: rotation about the axis of the outlet nozzle and movement along the axis of the outlet nozzle. Referring to FIGS. 1~7, the operating procedure is as follows:

(1) Install the signal cables for the probe assembly 40 and the air lines for the pneumatic slide table and the pen-type cylinder. If performing scanning on a shore-based mock-up, also set up the water circulation recovery device.

(2) Connect the pipelines between the main device drive system, the pneumatic control system, the ultrasonic scanning software, the coupling water circulation system, and the automated ultrasonic scanning equipment. Ensure both the pen-type cylinder and the pneumatic slide table are in the retracted state.

(3) First, adjust the main device to the position where the axis of the main device coincides with the axis of the outlet nozzle. Rotate the main device circumferentially to position the inspection device at the horizontal or vertical position of the nozzle. Then, move the main device along the nozzle axis to bring the inspection device closer to the boss of the outlet nozzle. Stop moving when an appropriate distance from the inspection device to the boss of the outlet nozzle is reached.

(4) First, activate the radial positioning mechanism 10 to bring the rolling element 23 into contact with the inner wall of the outlet nozzle. Then, extend the pneumatic slide table to bring the two positioning balls 332 on the swingable rod into contact with the boss surface 111 of the outlet nozzle. At this point, the ultrasonic probe 41 is automatically in contact with the inner radius region 112. Confirm good coupling of the ultrasonic probe 41 based on the ultrasonic feedback signal. The pen-type cylinder and the pneumatic slide table are connected to two paths of the pneumatic control system controlled by pressure proportional valves, maintaining a constant extension force. At this stage, the pen-type cylinder and the pneumatic slide table act like two constant-force springs. When encountering variations in the position of the nozzle inner wall and the boss surface 111, they can adaptively adjust to ensure the ultrasonic probe 41 remains in the inner radius region.

(5) Calibrate the position and scale of the scanning equipment using the equipment, motor drive system, and ultrasonic analysis software to ensure the equipment's movement and positioning meet the requirements. After calibration is complete, position the equipment at the zero point.

(6) Test the status of the ultrasonic probe 41 to ensure it is properly installed.

(7) Ultrasonic Scanning Operation:

This position is the zero point. Open the motor drive software and the ultrasonic acquisition software; connect the primary circumferential position encoder signal.

Control the combined motion of the two degrees of freedom motion axes of the main device to drive the inspection device to complete the spatial movement along the saddle-shaped profile of the inner radius region 112 for a full circumferential scan.

After scanning is complete, move the equipment to a suitable position and review the scanning results in the ultrasonic data acquisition software. Check for any data loss or unclear areas to ensure the quality of the acquired data meets the requirements.

Rescan areas that do not meet the requirements according to the scanning plan until the entire scanning task is completed.

During scanning, the movement of the device for inspecting inner radius region on opening of reactor pressure vessel nozzle inside the nozzle satisfies the following formula:

$$Z = \sqrt{R^2 - (r\sin\theta)^2};$$

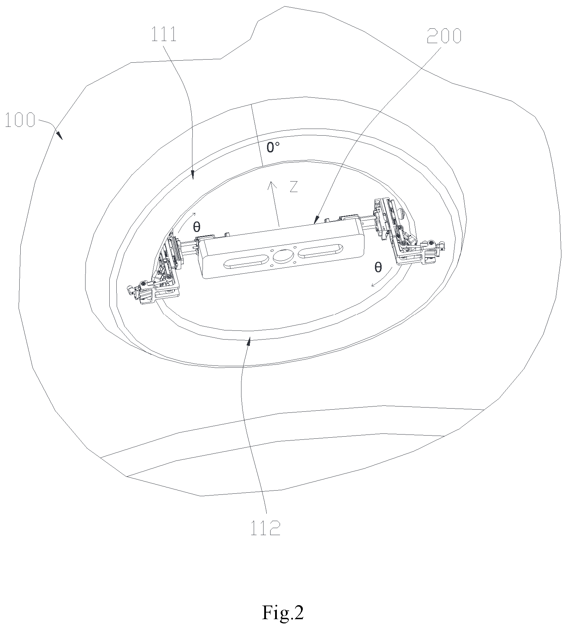

where: Z is the distance moved along axial direction of the nozzle; R is the radius of the circle on which the boss surface of the nozzle lies within the pressure vessel, i.e., the distance from the central axis of the pressure vessel to the boss surface of the nozzle; r is the inner radius of the nozzle; $\theta$ is the circumferential position angle of the device for inspecting inner radius region on opening of reactor pressure vessel nozzle within the nozzle, where 0° is defined as the top vertical position of the boss surface 111 (as shown in FIG. 2).

In a selective embodiment, the entire inner radius region of the nozzle is divided into 720 scanning areas. The angle between two adjacent scanning areas is 0.5°. If the circumferential position angle in current scanning is $\theta$, the next scanning position is $\theta + 0.5°$.

After completing the motion for each group of scanning sectors, perform deviation detection. If the deviation between the actual position and the target position exceeds 0.1 mm, perform position compensation to correct the excessive deviation. After compensation is complete, proceed to the next group motion control.

The above achieves ultrasonic scanning of the saddle surface (i.e., the inner radius region) based on vector motion control. During the scanning motion, the piston position of the pneumatic slide table of the axial positioning mechanism 20 can remain substantially consistent. This can reduce the required stroke of the pneumatic slide table and also prevents the swingable rod 32 from bearing greater force to drive the pneumatic slide table movement, improving the stress condition of the swingable rod 32.

In summary, the present invention achieves the delivery of the ultrasonic probe to the inner radius region, enables precise control of the relative position between the ultrasonic probe and the inspected object, thereby ensuring the accuracy of defect detection; it enables the ultrasonic probe to achieve precise positioning within a small-size inner radius region; it solves the influence of the angle between the nozzle inner wall and the boss surface of the outlet nozzle on probe positioning at different circumferential angles of the nozzle; the probe support can provide sufficient coupling degrees of freedom within a limited space and be able to clamp the probe for accurate contact with the inner radius region.

The above descriptions are merely embodiments of the present invention and are not intended to limit the patent scope of the present invention. Any equivalent structure or equivalent process transformation made based on the content of the description and drawings of the present invention, or direct or indirect application in other related technical fields, shall similarly fall within the patent protection scope of the present invention.

**Claims**

1. A device for inspecting inner radius region on opening of reactor pressure vessel nozzle, **characterized by** comprising:

   a radial positioning mechanism, an axial positioning mechanism disposed on the radial positioning mechanism, an adaptive linkage mechanism disposed on the axial positioning mechanism, and a probe assembly disposed on the adaptive linkage mechanism;
   wherein the radial positioning mechanism is configured to drive the axial positioning mechanism, the adaptive linkage mechanism, and the probe assembly to move back and forth along a radial direction of an opening of a nozzle of a pressure vessel;
   wherein the axial positioning mechanism is movable back and forth in an axial direction of the nozzle relative to the radial positioning mechanism, so as to drive the adaptive linkage mechanism to approach or move away from a boss surface of the nozzle, and drive the probe assembly to approach or move away from an inner radius region of the opening, respectively; and
   wherein the adaptive linkage mechanism is configured, through an adaptive action, to drive itself to be in contact with the boss surface of the nozzle, and drive the probe assembly to be in contact with the inner radius region of the opening, respectively.

2. The device for inspecting inner radius region on opening of reactor pressure vessel nozzle according to claim 1, **characterized in that** the adaptive linkage mechanism comprises a slide plate, a swingable rod, and a positioning assembly;
wherein the slide plate is engaged with the axial positioning mechanism and is movable back and forth along axial direction of the nozzle relative to the axial positioning mechanism, the swingable rod is connected to the slide plate at an adjustable angle; the positioning assembly is disposed on the swingable rod, configured to slidingly contact the boss surface of the nozzle, and guides a synchronous change in the angle between the swingable rod and the slide plate; wherein the probe assembly is located on one side of the swingable rod, is movably connected to the slide plate, and is rotatable relative to the slide plate to allow the probe assembly to be in contact with the inner radius region of the opening.

3. The device for inspecting inner radius region on opening of reactor pressure vessel nozzle according to claim 2, **characterized in that** the positioning assembly comprises a positioning seat and at least two positioning balls for slidingly being contact with the boss surface of the nozzle; the positioning seat is disposed on the swingable rod and parallel to a length direction of the swingable rod, and the at least two positioning balls are arranged at intervals along the length direction of the positioning seat.

4. The device for inspecting inner radius region on opening of reactor pressure vessel nozzle according to claim 2, **characterized in that** the probe assembly comprises a probe support and an ultrasonic probe; wherein the probe support is movably connected to the slide plate, the ultrasonic probe is disposed on the probe support and has multiple degrees of freedom relative to the slide plate.

5. The device for inspecting inner radius region on opening of reactor pressure vessel nozzle according to claim 4, **characterized in that** the probe support comprises a bracket and a probe frame; one end of the bracket is connected to the slide plate via a pivot assembly, the probe frame is rotatably connected to the other end of the bracket; wherein the ultrasonic probe is swingably mounted inside the probe frame, and the ultrasonic probe has a probe surface configured to conform to the inner radius region of the opening.

6. The device for inspecting inner radius region on opening of reactor pressure vessel nozzle according to claim 5, **characterized in that** the pivot assembly comprises a pivot passing through the bracket and the slide plate, a torsion spring sleeved on the pivot, and a limit plate disposed on the bracket and configured to abut against the slide plate.

7. The device for inspecting inner radius region on opening of reactor pressure vessel nozzle according to claim 5, **characterized in that** the bracket comprises a first U-shaped frame and a second U-shaped frame; the first U-shaped frame is connected to the slide plate via the pivot assembly, the second U-shaped frame is engaged with the first U-shaped frame and is swingable back and forth relative to the first U-shaped frame.

8. The device for inspecting inner radius region on opening of reactor pressure vessel nozzle according to claim 2, **characterized in that** the axial positioning mechanism comprises an L-shaped bracket movable back and forth along axial direction of the nozzle relative to the radial positioning mechanism;
wherein a horizontal portion of the L-shaped bracket is provided with guide rail and a rolling element; the slide plate is engaged with the guide rail via a slider and is movable back and forth along the axial direction of the nozzle along the guide rail; the rolling element protrudes above the slide plate on the horizontal portion for being contact with an inner wall of the nozzle; one end of the swingable rod is rotatably connected to the slide plate, and the other end of the swingable rod is rotatably connected to a vertical portion of the L-shaped bracket.

9. The device for inspecting inner radius region on opening of reactor pressure vessel nozzle according to claim 8, **characterized in that** the axial positioning mechanism further comprises a pneumatic assembly disposed on the radial positioning mechanism and supporting the L-shaped bracket, the pneumatic assembly drives the L-shaped bracket to move back and forth along the axial direction of the nozzle relative to the radial positioning mechanism.

10. The device for inspecting inner radius region on opening of reactor pressure vessel nozzle according to any one of the claims 1 to 9, **characterized in that** the radial positioning mechanism comprises a slide table mounting plate and a drive assembly, the slide table mounting plate is disposed on a drive shaft of the drive assembly, the drive assembly drives the slide table mounting plate to move back and forth along the radial direction of the opening of the nozzle of the pressure vessel; the axial positioning mechanism is disposed on the slide table mounting plate and is fixed relative thereto.

11. The device for inspecting inner radius region on opening of reactor pressure vessel nozzle according to claim 10, **characterized in that** the radial positioning mechanism further comprises a support base and a guiding component;

wherein the drive assembly is supported on the support base; the drive shaft of the drive assembly is extendable and retractable relative to the support base, driving the slide table mounting plate to move back and forth along the radial direction of the opening of the nozzle relative to the support base; and
wherein the guiding component is movably passed through the support base and connected to the slide table mounting plate, providing guidance for the back-and-forth movement of the slide table mounting plate.

12. An operating method of the device for inspecting inner radius region on opening of reactor pressure vessel nozzle according to any one of claims 1 to 11, **characterized in that** at least two sets of devices are installed in pairs on a main device coaxial with the nozzle, the two sets of devices for inspecting inner radius region on opening of reactor pressure vessel nozzle being symmetrically arranged about a central axis of the nozzle; and

movement of the device for inspecting inner radius region on opening of reactor pressure vessel nozzle inside the nozzle satisfies the following formula:

$$Z = \sqrt{R^2 - (r sin\theta)^2};$$

where, Z is the distance moved along axial direction of the nozzle, R is the radius of the circle on which the boss surface of the nozzle lies within the pressure vessel, r is the inner radius of the nozzle, $\theta$ is the circumferential position angle of the device for inspecting inner radius region on opening of reactor pressure vessel nozzle within the nozzle, where 0° is defined as the top vertical position of the boss surface.

Fig.1

Fig.2

Fig.3

10

11  121

13

12  14

15

Fig.4

20

23

22

212

211  21

24

Fig.5

Fig.6

Fig.7

421

422

48

47

47

48

Fig.8

## INTERNATIONAL SEARCH REPORT

| International application No. |
|---|
| **PCT/CN2024/122934** |

### A. CLASSIFICATION OF SUBJECT MATTER

G21C17/017(2006.01)i

According to International Patent Classification (IPC) or to both national classification and IPC

### B. FIELDS SEARCHED

Minimum documentation searched (classification system followed by classification symbols)

IPC: G21C17

Documentation searched other than minimum documentation to the extent that such documents are included in the fields searched

Electronic data base consulted during the international search (name of data base and, where practicable, search terms used)

CNTXT, CNKI, 百度学术, BAIDU SCHOLAR: 管口, 内圆角, 探头, 超声, 径向, 周向, 轴向, 自适应, 连杆, 辊, 滚珠, 马鞍, 贴合; VEN, DWPI, USTXT, EPTXT, WOTXT, JPTXT, KRTXT, ISI_web of science: Nozzle, fillet, probe, ultrasonic, radial, circumferential, axial, adaptive, linkage, roller, ball, saddle, snug

### C. DOCUMENTS CONSIDERED TO BE RELEVANT

| Category* | Citation of document, with indication, where appropriate, of the relevant passages | Relevant to claim No. |
|---|---|---|
| X | CN 105810265 A (CHINA NUCLEAR POWER OPERATION TECHNOLOGY CORP., LTD. et al.) 27 July 2016 (2016-07-27)<br>description, paragraphs 14-15, and figure 1 | 1 |
| Y | CN 105810265 A (CHINA NUCLEAR POWER OPERATION TECHNOLOGY CORP., LTD. et al.) 27 July 2016 (2016-07-27)<br>description, paragraphs 14-15, and figure 1 | 2-12 |
| Y | CN 101916599 A (CGN INSPECTION TECHNOLOGY CO., LTD. et al.) 15 December 2010 (2010-12-15)<br>description, paragraph 28, and figure 4 | 2-12 |
| A | CN 101894593 A (CGN INSPECTION TECHNOLOGY CO., LTD. et al.) 24 November 2010 (2010-11-24)<br>entire document | 1-12 |
| A | CN 105806938 A (CHINA NUCLEAR POWER OPERATION TECHNOLOGY CORP., LTD. et al.) 27 July 2016 (2016-07-27)<br>entire document | 1-12 |

✓ Further documents are listed in the continuation of Box C.  ✓ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 June 2025** | **12 June 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/122934** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005181140 A (JFE ENGINEERING KK) 07 July 2005 (2005-07-07) entire document | 1-12 |

Form PCT/ISA/210 (second sheet) (July 2022)

**INTERNATIONAL SEARCH REPORT**
**Information on patent family members**

International application No.

**PCT/CN2024/122934**

| Patent document cited in search report | | | Publication date (day/month/year) | Patent family member(s) | | | Publication date (day/month/year) |
|---|---|---|---|---|---|---|---|
| CN | 105810265 | A | 27 July 2016 | CN | 105810265 | B | 28 November 2017 |
| CN | 101916599 | A | 15 December 2010 | CN | 101916599 | B | 26 December 2012 |
| CN | 101894593 | A | 24 November 2010 | CN | 101894593 | B | 11 July 2012 |
| CN | 105806938 | A | 27 July 2016 | CN | 105806938 | B | 26 March 2019 |
| JP | 2005181140 | A | 07 July 2005 | JP | 4232623 | B2 | 04 March 2009 |

Form PCT/ISA/210 (patent family annex) (July 2022)